# FASCICULE DE BREVET EUROPEEN

(11) **EP 0 431 438 B1**
(45) Date de publication et mention de la délivrance du brevet: **22.02.1995**
(21) Numéro de dépôt: 90122544.1
(22) Date de dépôt: 26.11.1990
(51) Int. Cl.: H04L 12/56, H04L 12/64

(54) **Procédé de gestion des flux dans un réseau numérique de télécommunication à intégration de services, à large bande, et réseau pour la mise en oeuvre de ce procédé**
Verfahren zur Regelung des Datenstroms in einem Breitband ISDN und Netz zur Realisierung
Flow control procedure for a broadband integrated services digital telecommunication network, and network to realize the procedure

(30) Priorité: 27.11.1989 FR 8915551
(43) Date de publication de la demande: 12.06.1991
(73) Titulaire: ALCATEL CIT, 75008 Paris (FR)
(72) Inventeur: Mobasser, Bahman, F-78310 Maurepas (FR)
(74) Mandataire: Weinmiller, Jürgen

(56) Documents cités:
- EP-A- 0 275 678
- A.S. TANENBAUM: "Computer networks", chapitre 4, pages 136-186, Prentice HallInc., Englewood, US; "The data link layer"
- IEEE JOURNAL ON SELECTED AREAS IN COMMUNICATIONS, vol. 6, no. 9, décembre 1988,pages 1609-1616, IEEE, New York, US; H. OHNISHI et al.: "Flow control schemesand delay/loss tradeoff in ATM network"
- 5TH ANNUAL INTERNATIONAL PHOENIX CONFERENCE ON COMPUTERS AND COMMUNICATIONS,Scottsdale, Arizona, 26-28 mars 1986, pages 174-179, IEEE, New York, US; R.JAIN: "Divergence of timeout algorithms for packet retransmissions"

## Description

L'invention concerne un procédé de gestion des flux dans un réseau numérique de télécommunication à intégration de services, et un réseau pour la mise en oeuvre de ce procédé. Les futurs réseaux à intégration de services seront à large bande et utiliseront le mode de transfert asynchrone comme seul mode de transfert de données. Ce mode de transfert a notamment comme avantage de permettre de nouvelles applications non encore connues, parce qu'il n'impose pas les contraintes de canaux à débit fixe. Ce type de réseau a pour inconvénient de provoquer la perte de données lorsqu' il arrive à un état de congestion.

Les terminaux que comporte un tel réseau émettent et reçoivent des données sous la forme de cellules ayant une longueur fixée. Au cours du transfert des cellules à travers les noeuds constituant le réseau, chaque cellule est stockée plus ou moins longtemps dans des files d'attentes, et c'est le débordement de certaines files d'attente qui cause une perte de cellules. Jusqu'à présent, il n'est pas prévu d'accusé de réception ou de détection de perte de cellules, au niveau du réseau lui-même, pour ne pas ralentir le fonctionnement du réseau. Grâce à la simplicité de la gestion du réseau, celui-ci autorise des débits extrêmement élevés, pouvant atteindre 600 Mégabits par seconde. L'efficacité d'utilisation des ressources du réseau et la qualité du service varient en fonction des demandes de ressources, correspondant à l'établissement de différentes connexions partageant un même lot de ressources.

Jusqu'à présent, cette efficacité et cette qualité de service sont considérées comme suffisantes sans qu'il soit nécessaire de prévoir une gestion des flux dans le réseau, parce que les différents terminaux considérés jusqu'à présent fournissent, très majoritairement, des débits fixes. On envisage de plus en plus des applications, telles que la télévision à haute définition, pour lesquelles les terminaux pourraient être très nombreux et fournir des débits élevés et variables. Si les données transmises par un réseau à multiplexage temporel asynchrone sont majoritairement à débit variable, il devient nécessaire d'envisager une régulation des flux, pour optimiser l'utilisation des ressources et la qualité du service.

Les réseaux de connexion à mode de transfert asynchrone ne sont qu'un cas particulier des réseaux à commutation de paquets. Les réseaux connus, à commutation de paquets, assurent un service très spécialisé qui est la consultation de banques de données. Ils gèrent le flux sur chaque connexion en utilisant la souplesse des sources et des récepteur de données. Cette souplesse est procurée par le stockage des données dans des mémoires tampons, ce stockage étant limité dans des tolérances définies par le protocole de transfert dans le réseau.

Un protocole connu, appelé X25 d'après une Recommandation du CCITT (Comité Consultatif International de Télégraphie et Téléphonie), n'impose pas de procédé particulier de gestion des flux dans un réseau, mais son utilisation au niveau de chaque noeud du réseau permet de commander le flux sur chaque connection. Chaque noeud commande entièrement le débit des données qu'ils reçoit à partir des noeuds adjacents. Le réseau commande aussi les sources de données indirectement : chaque noeud peut réguler les noeuds adjacents et ainsi l'effet de régulation se propage jusqu'à la source des données. Un tel réseau comporte un automate de service à chaque port d'entrée-sortie dans chaque noeud. Cette structure a pour inconvénient de limiter les débits des connexions, car les échanges d'information de service entre les noeuds prennent du temps.

Dans des réseaux connus, dits à relais de trames, les terminaux comportant des automates de service appliquant un protocole appellé LAP-D. Il n'y a aucun automate de service appliquant ce protocole à l'intérieur des noeuds du réseau. Contrairement aux réseaux utilisant le protocole X25, les noeuds du réseau ne peuvent pas accepter ou rejeter explicitement des trames. A cause de ce fait, le procédé de gestion de flux utilise certaines fonctions des automates de service appliquant le protocole LAP-D, dans les terminaux. Les fonctions utilisées sont les suivantes :
- émettre un accusé de réception lorsque le terminal reçoit une trame de données;
- continuer à émettre des trames de données après avoir émis une première trame, en attendant de recevoir un accusé de réception correspondant à la première trame; le nombre de trames émises pendant cette attente étant limité à un nombre prédéterminé;
- puis suspendre l'émission des trames pendant une durée prédéterminée, si l'accusé de réception n'est pas reçu avant d'avoir achevé de transmettre le nombre prédéterminé de cellules;
- puis de transmettre de nouveau la première cellule, si l'accusé de réception correspondant n'a pas été reçu pendant la durée prédéterminée;
- puis libérer la connexion occupée par le terminal considéré si l'accusé de réception n'a pas été reçu après un délai prédeterminé, mesuré à partir de la première émission de la première trame.

Le réseau peut exercer une régulation du flux de données sur une connexion en retardant ou en supprimant des trames de données. Ces actions sont tolérées par le terminal émettant les données et par le terminal recevant les données. Elles ont pour conséquence des répétitions de trames et des périodes sans émission de trames, qui ont finalement pour effet de diminuer le débit de données et donc de diminuer la congestion du réseau.

Ces procédés connus de gestion des flux reposent sur les tolérances définies par les valeurs prédéterminées des paramètres des protocoles X25 et LAP-D, respectivement. Ces valeurs de paramètres ont été déterminés en fonctions des retards et des pertes de données tolérables sur des connexions spécialisées pour la consultation de bases de données. Or le retard ou la perte de données n'a pas du tout les mêmes conséquences selon le type de service considéré. Une consultation de base de données ne tolère pas des pertes de données, mais tolère très bien des retards.

Une liaison téléphonique ne peut pas supporter un retard supérieur à 100 millisecondes, alors qu'elle peut supporter la perte de quelques paquets de données sans réémission de ces paquets. Par contre, une liaison transmettant des images de télévision peut supporter un retard atteignant quelques secondes, à condition que ce retard soit limité entre deux bornes prédéterminées, le terminal étant muni d'une mémoire permettant de rattraper les variations de ce retard. Mais les images transmises peuvent être très sensibles aux pertes de données, si le procédé de codage est un procédé différentiel qui fait intervenir des images précédentes pour décoder une image courante. Les procédés connus de gestion des flux dans un réseau ne sont donc pas utilisables directement dans un réseau à intégration de services, à large bande et à transfert asynchrone.

Le but de l'invention est de proposer un procédé pour gérer les flux dans un réseau à multiplexage temporel asynchrone, intégrant des services de divers types, à large bande, en tenant compte du type de service pour chaque connexion, afin d'optimiser en même temps l'utilisation des ressources et la qualité du service; et ne nécessitant pas l'utilisation d'automates de service au niveau de chaque noeud du réseau.

L'objet de l'invention est un procédé de gestion des flux dans un réseau à multiplexage temporel asynchrone consistant essentiellement à retarder ou à laisser perdre des cellules de données, dans des limites qui sont prédéterminées en fonction du type de service assuré par les terminaux connectés par la connexion considérée.

Selon l'invention, un procédé de gestion des flux dans un réseau numérique de télécommunication, à intégration de services, à large bande, comportant un réseau de connexion à multiplexage temporel asynchrone et une pluralité de terminaux à débits variables assurant différents types de service; ces terminaux émettant et recevant des données sous la forme de cellules ayant une longueur fixée, et selon un protocole de communication adapté au multiplexage temporel asynchrone;
est caractérisé en ce qu'il consiste, dans chaque terminal, à :
- émettre un accusé de réception lorsque le terminal considéré reçoit une cellule;
- continuer à émettre des cellules de données après avoir émis une première cellule , en attendant de recevoir un accusé de réception correspondant à la première cellule, en limitant le nombre de cellules émises pendant cette attente, à un nombre W prédéterminé;
- puis suspendre l'émission des cellules pendant une durée prédéterminée Trep si l'accusé de réception n'a été pas reçu avant d'avoir achevé de transmettre W cellules;
- puis transmettre de nouveau la première cellule si l'accusé de réception correspondant n'a pas été reçu pendant la durée Trep;
- puis libérer la connexion occupée par le terminal considéré, si l'accusé de réception n'a pas été reçu après un délai prédéterminé Tmax, mesuré à partir de la première émission de la première cellule;
   en ce que les valeurs prédéterminées de W, Trep, et Tmax sont fonctions du type de service assuré par le terminal considéré;
   et en ce que, dans le réseau de connexion, si celui-ci est proche d'une congestion, il consiste à :
- déterminer, pour chaque connexion, les valeurs des paramètres W, Trep, Tmax, en fonction du type de service assuré par les terminaux connectés par la connexion considérée;
- retarder une suite de cellules émises sur chaque connexion, en limitant à un nombre inférieur ou égal à w, le nombre de cellules de cette suite;
- perdre une cellule et d'autres cellules identiques, émises sur chaque connexion, en limitant la durée correspondant à la perte de cellules, à une valeur inférieure à Tmax.

L'invention sera mieux comprise et d'autres détails apparaîtront à l'aide de la description ci-dessous et des figures l'accompagnant :
- la figure 1 représente un diagramme temporel illustrant le protocole d'émission des cellules de données, et d'attente d'un accusé de réception;
- la figure 2 représente schématiquement un exemple de réalisation d'un réseau numérique de télécommunication, à intégration de services, pour la mise en oeuvre du procédé selon l'invention.

Un réseau classique à multiplexage temporel asynchrone ne comporte pas de protocole de contrôle de flux : un terminal émet des cellules de données tant qu'il a des données à transmettre. Il n'attend aucun accusé de réception, ni aucun autre message du réseau. Un terminal recevant des données se contente de vérifier l'identificateur du canal virtuel constituant la connexion. Toutes les cellules comportant un identificateur correct sont acceptées sans qu'aucun accusé de réception, ou message de contrôle de flux, ne soit émis à destination du réseau ou à destination du terminal émettant les données.

Selon l'invention, un terminal qui reçoit une cellule émet un accusé de réception à destination du terminal ayant émis la cellule. Le terminal qui a émis cette cellule reçoit l'accusé de réception après un certain délai de transmission, et en conclut que la transmission de la cellule a été effectivement réalisée. Dans le cas contraire, il exécute une séquence d'opérations prédéterminées.

Chaque cellule portant un numéro, il est possible d'émettre un seul accusé de réception pour toute une suite de cellules. Il est interprété comme accusé de réception pour chaque cellule émise avant la cellule correspondant à l'accusé de réception.

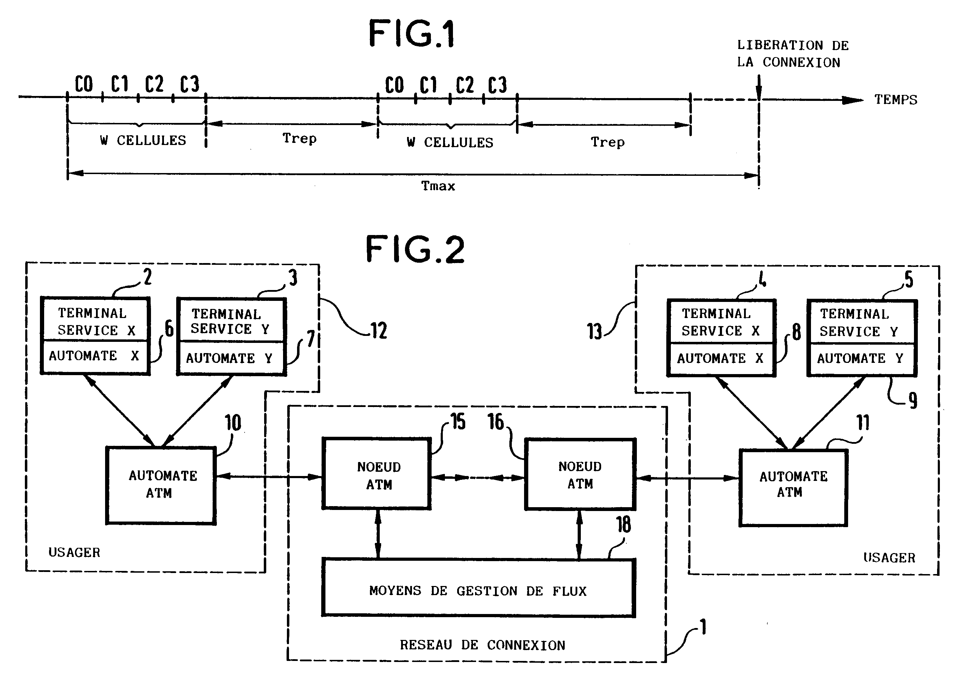

La figure 1 illustre le cas un terminal ayant émis une cellule C0 et qui ne reçoit pas d'accusé de réception, ce qui se produit notamment lorsque le réseau retarde ou fait disparaître la cellule émise, afin de remédier à un état de congestion ou proche de la congestion. Le terminal continue à émettre des cellules de données, C1, C2, C3, en attendant de recevoir l'accusé de réception correspondant à la cellule C0 ou correspondant à l'une des cellules qui la suit. Le nombre de cellules émises pendant cette attente est limité à un nombre prédéterminé W qui est égal à 4 dans cet exemple, en incluant la première cellule C0.

Puis il consiste à suspendre l'émission des cellules pendant une durée prédéterminée Trep, si l'accusé de réception n'a pas été reçu avant d'avoir achevé de transmettre les W cellules C0...C3. Puis il consiste à transmettre de nouveau la première cellule C0; puis à transmettre de nouveau les cellules C1,C2, et C3, si l'accusé de réception correspondant à la cellule C0 n'a pas été reçu pendant la durée Trep.

L'émission des cellules et la pause de durée Trep sont renouvelées plusieurs fois, en mesurant le temps écoulé à partir de la première émission de la première cellule C0.
Le procédé consiste ensuite à libérer la connexion occupée par le terminal considéré, si l'accusé de réception correspondant à la cellule C0 n'a pas été reçu après un délai prédéterminé Tmax. Ce délai est choisi en fonction du délai maximal tolérable pour la transmission d'une cellule de données et la transmission, en retour d'un accusé de réception retour, à travers le réseau.

Ces fonctions sont réalisées, dans chaque terminal, par un automate dit de service, commandant un autre automate qui est chargé d'émettre et de recevoir des données sous la forme de cellules ayant une longueur fixée et selon un protocole adapté au multiplexage temporel asynchrone. Les paramètres W, Trep, Tmax sont prédéterminés en fonction du type de service assuré par le terminal considéré.

Par exemple, le paramètre W est infini pour un terminal téléphonique, car il n'est pas nécessaire d'attendre des accusés de réception ni de répéter l'émission d'une cellule de données perdue. Pour d'autres types de service, W a une valeur finie qui est plus ou moins grande selon la tolérance du type de service considéré, vis-à-vis des retards de transmission. Cette tolérance est déduite du protocole utilisé pour la segmentation des messages de ce type de service. Il en est de même pour le choix d'une valeur prédéterminée Trep. La valeur Tmax correspond au délai maximal tolérable pour la transmission d'un terminal à un autre, compte tenu du type de service considéré, sachant que, si le délai devient inacceptable, la seule issue consiste à libérer complètement la connexion.

Le procédé de gestion, au niveau du réseau lui-même est décrit ci-après.

La figure 2 représente schématiquement un exemple de réalisation d'un réseau numérique de télécommunication à intégration de services, selon l'invention. Il comporte un réseau 1 de connexion à multiplexage temporel asynchrone et deux équipements d'usager 12, 13 donnés à titre d'exemples.

L'équipement 12 comporte deux terminaux, 2 et 3, couplés respectivement à deux automates dits de service, 6 et 7, appliquant le protocole décrit ci-dessus, respectivement pour deux services, X et Y, qui sont, par exemple, la transmission téléphonique et la diffusion d'images de télévision. Les automates de service 6 et 7 sont couplés à un automate commun 10, appellé automate ATM, qui émet et reçoit des données sous la forme de cellules, selon un protocole adapté au réseau de connexion à multiplexage temporel asynchrone. Cet automate 10 est relié à un noeud 15 du réseau 1.

L'équipement 13 est analogue à l'équipement 12. Il comporte deux terminaux, 4 et 5, couplés respectivement à deux automates de service, 8 et 9, appliquant le protocole décrit ci-dessus, respectivement pour les deux services, X et Y. Les automates de service 8 et 9 sont couplés à un automate commun 11, appellé automate ATM, qui émet et reçoit des données sous la forme de cellules, selon le protocole adapté au réseau de connexion à multiplexage temporel.

Le réseau 1 est constitué d'une suite de noeuds dits ATM, 15, ..., 16, et de moyens de gestion de flux 18 répartis dans ces noeuds. Chaque noeud ATM,15,..., 16 comporte déjà des moyens de gestion classiques aiguillant les cellules de données en fonction d'étiquettes, et en fonction de signaux de signalisation. Les moyens 18 se superposent aux moyens de gestion classiques et les supervisent. Les moyens de gestion 18 aplanissent les pointes de trafic en retardant la transmission de cellules, par rapport à la vitesse moyenne du trafic, lorsque le réseau est très chargé, et même en laissant perdre certaines cellules lorsque le réseau est proche de la congestion. Cependant, la qualité de service est maintenue constante, grâce à une application sélective de ces actions de retard ou de suppression de ces cellules. En effet, certains types de service ne peuvent pas tolérer de retards supplémentaires ou de pertes de cellules pendant les pointes de trafic, alors que d'autres types de service peuvent tolérer soit des retards, soit des pertes de données.

Les moyens de gestion 18 déterminent, pour chaque connexion, les valeurs des paramètres W,Trep, Tmax, en fonction du type de service assuré par les terminaux connectés par la connexion considérée. Le type de service est connu, par exemple, au moyen d'une information reçue à l'instant où la connexion est demandée par un terminal. Lorsque le réseau est très chargé, les moyens 18 gagnent du temps en retardant une suite de cellules émises consécutivement sur chaque connexion. Le nombre de cellules de la suite est inférieur ou égal à W. Cependant, les moyens 18 limitent le retard de chaque cellule à la valeur Tmax. Dans le cas d'une transmission téléphonique, cette dernière limitation est la seule qui importe, puisque le nombre W est infini.

Par exemple, dans le cas représenté sur la figure 1, les moyens de gestion 18 peuvent retarder la transmission des cellules C0, C1, C2, C3, en les inscrivant dans une file d'attente et en les y laissant au moins jusqu'à ce que C3 ait été reçue et inscrite dans la file d'attente. Les moyens 18 savent que le terminal émetteur va observer automatiquement une pause de durée Trep, à cause de l'absence d'accusé de réception découlant de la non-transmission de la cellule C0, dûe au retard qui lui est affligé par le réseau.

Naturellement, il est possible de gagner un délais plus petit en stockant un nombre de cellules inférieur à W.

Quand le réseau est encore plus proche d'une congestion, les moyens de gestion 18 recourent à des pertes de données, pour gagner du temps en profitant du fait que le terminal émetteur va répéter plusieurs fois la pause de durée Trep, et la réémission des cellules C0, C1, C2, C3. Les moyens de gestion 18 limitent la durée correspondant à cette perte de cellules à une valeur inférieure Tmax, déterminée pour cette connexion, de façon à ne pas amener l'automate de service, du terminal émetteur, à interrompre la liaison en libérant la connexion.

Le fait de tenir compte de la valeur des trois paramètres W, Trep, Tmax, propres au type de service assuré par chaque connexion à un instant donné, permet d'individualiser la gestion de flux sur chaque connexion, pour éviter que le réseau atteigne effectivement la congestion, tout en évitant de dégrader gravement la qualité de service pour chaque type de service. Par exemple, pour une connexion assurant un service téléphonique, le nombre W est infini et la durée Trep est infinie, ce qui correspond à l'absence de nécessité d'un accusé de réception et l'absence de répétition des cellules perdues; et la durée Tmax est égale 100 millisecondes. Au contraire, pour une connexion assurant un service de transmission d' images de télévision diffusée, le nombre W est égal à 20; la durée Trep est égale à 100 millisecondes; et la durée Tmax est égale à une seconde, par exemple. Lorsque le réseau approche de la congestion les moyens de gestion 18 ne peuvent que très peu retarder les cellules des connexions assurant le service téléphonique, à cause de la tolérance Tmax= 100 millisecondes, mais par contre ils peuvent laisser perdre certaines cellules sur ces connexions, pendant une durée inférieure à Tmax=100 millisecondes. Au contraire, les moyens de gestion 18 s'abstiennent de provoquer des pertes de données sur les connexions de transmission d'images, mais peuvent provoquer des retards en stockant des suites de 20 cellules, jusqu'à un retard maximal égal à Tmax=1 seconde.

La portée de l'invention ne se limite pas aux exemples décrits ci-dessus, en particulier des types de service très divers peuvent être assurés à condition d'attribuer aux paramètres W, Trep, Tmax, des valeurs permettant de retarder des cellules de données, ou d'en supprimer, sans dégrader gravement la qualité du service.

L'utilisation d'un jeu de paramètres ayant des valeurs différentes pour chaque service est équivalente à traiter un réseau physique comme la juxtaposition de plusieurs réseaux virtuels correspondant respectivement aux différents services. Chaque réseau virtuel mono-service correspond à un jeu de paramètres W, Trep, Tmax, et possède ses propres ressources réservées. En pratique, des services ayant des caractéristiques de trafic semblables peuvent être groupés ensemble dans un même réseau virtuel, c'est à dire avec un même jeu de paramètres W, Trep, Tmax.

## Revendications

1. Procédé de gestion des flux dans un réseau numérique de télécommunication, à intégration de services, à large bande, comportant un réseau (1) de connexion à multiplexage temporel asynchrone et une pluralité de terminaux (2 à 5), à débits variables, assurant différents types de service; ces terminaux émettant et recevant des données sous la forme de cellules ayant une longueur fixée, et selon un protocole de communication adapté au multiplexage temporel asynchrone;
caractérisé en ce qu'il consiste, dans chaque terminal (2 à 9), à :
- émettre un accusé de réception lorsque le terminal considéré reçoit une cellule;
- continuer à émettre des cellules (C1, C2, C3) après avoir émis une première cellule (C0), en attendant de recevoir un accusé de réception correspondant à la première cellule (C0), en limitant le nombre de cellules émises pendant cette attente, à un nombre W prédéterminé;
- puis suspendre l'émission des cellules pendant une durée prédéterminée Trep si l'accusé de réception n'a été pas reçu avant d'avoir achevé de transmettre W cellules (C0,...,C3);
- puis transmettre de nouveau la première cellule (C0) si l'accusé de réception correspondant n'a pas été reçu pendant la durée Trep;
- puis libérer la connexion occupée par le terminal considéré, si l'accusé de réception n'a pas été reçu après un délai prédéterminé Tmax, mesuré à partir de la première émission de la première cellule (C0);
en ce que les valeurs prédéterminées de W, Trep, et Tmax sont fonctions du type de service assuré par le terminal considéré;
et en ce que, dans le réseau de connexion (1), si celui-ci est proche d'une congestion, il consiste à :
- déterminer, pour chaque connexion, les valeurs des paramètres W, Trep, Tmax, en fonction du type de service assuré par les terminaux connectés par la connexion considérée;
- retarder une suite de cellules émises sur chaque connexion, en limitant à un nombre inférieur ou égal à W, le nombre de cellules de cette suite;
- perdre une cellule et d'autres cellules identiques, émises sur chaque connexion, en limitant la durée correspondant à la perte de cellules, à une valeur inférieure à Tmax.

2. Réseau numérique de télécommunication à intégration de services, à large bande, pour la mise en oeuvre du procédé selon la revendication 1, comportant un réseau (1) de connexion à multiplexage temporel asynchrone et une pluralité de terminaux (2 à 5) à débits variables caractérisé en ce que chaque terminal (2 à 5) est couplé à des premiers moyens (10, 11) pour recevoir et émettre des données sous la forme de cellules ayant une longueur fixée, et selon un protocole de communication adapté au multiplexage temporel asynchrone; et à des seconds moyens ( 6 , 9 ) commandant les premiers moyens (10, 11) pour :
- émettre un accusé de réception lorsque le terminal reçoit une cellule de données émise par un autre terminal;
- continuer à émettre des cellules de données (C1, C2, C3) après avoir émis une première cellule (C0), en attendant de recevoir un accusé de réception correspondant à la première cellule (C0), en limitant le nombre de cellules émises pendant cette attente, à un nombre W prédéterminé et fonction du type de service assuré par le terminal considéré;
- puis suspendre l'émission de cellules pendant une durée prédéterminée Trep, si l'accusé de réception n'est pas reçu avant d'avoir achevé de transmettre W cellules (C0,..., C3), cette durée prédéterminée étant fonction du type de service assuré par le terminal considéré;
- puis transmettre de nouveau la première cellule (C0) si l'accusé de réception correspondant n'est pas reçu pendant la durée Trep;
- puis libérer la connexion occupée par le terminal considéré, si l'accusé de réception n'est pas reçu après un délai prédéterminé Tmax, mesuré à partir la première émission de la première cellule (C0), ce délai Tmax étant fonction du type de service assuré par le terminal considéré;
et en ce que le réseau de connexion (1), comporte des moyens de gestion (18) pour :
- déterminer les valeurs des paramètres W, Trep, Tmax, pour chaque connexion, en fonction du type de service assuré par les terminaux connectés par cette connexion;
- retarder une suite de cellules émises sur chaque connexion, tout en limitant à la valeur W le nombre de cellules de cette suite, et en limitant le retard à la valeur Tmax; si le réseau est très chargé;
- perdre une cellule, et d'autres cellules identiques réémises en conséquence par le terminal ayant émis la dite cellule, en limitant la durée correspondant à la perte de cellules à une valeur inférieure à Tmax; si le réseau est proche d'une congestion.

## Patentansprüche

1. Verfahren zur Verwaltung von Datenströmen in einem digitalen Breitband-Fernmeldenetz mit integrierten Diensten, das ein Vermittlungsnetz (1) mit asynchronem Zeitmultiplexbetrieb und eine Vielzahl von Endgeräten (2 bis 5) mit veränderlichen Durchsätzen für verschiedene Arten von Diensten aufweist, wobei diese Endgeräte Daten in Form von Zellen fester Länge gemäß einem Übertragungsprotokoll aussenden und empfangen, das an den asynchronen Zeitmultiplexbetrieb angepaßt ist,
dadurch gekennzeichnet, daß es bei jedem Endgerät (2 bis 9) darin besteht,
- eine Empfangsbestätigung auszusenden, wenn das betrachtete Endgerät eine Zelle empfängt,
- mit der Aussendung von Zellen (C1, C2, C3) fortzufahren, nachdem eine erste Zelle (C0) ausgesendet wurde, und zugleich auf eine Empfangsbestätigung betreffend die erste Zelle (C0) zu warten, wobei die Anzahl der ausgesendeten Zellen während des Wartens auf eine vorbestimmte Anzahl W begrenzt ist,
- dann die Aussendung der Zellen während einer vorbestimmten Dauer Trep zu unterbrechen, falls die Empfangsbestätigung nicht erhalten worden ist, bevor W Zellen (C0, ... C3) fertig übertragen wurden,
- dann erneut die erste Zelle (C0) zu übertragen, falls die entsprechende Empfangsbestätigung nicht während der Dauer Trep erhalten worden ist,
- dann die besetzte Verbindung durch das betrachtete Endgerät freizugeben, falls die Empfangsbestätigung nicht nach einer vorbestimmten Zeitdauer Tmax, gemessen ab Beginn der ersten Aussendung der ersten Zelle (C0) erhalten worden ist,
daß die vorbestimmten Werte Trep und Tmax und W vom Typ des vom betrachteten Endgerät durchgeführten Dienstes abhängen,
und daß das Verfahren im Vermittlungsnetz (1), falls dieses einer Überlastung nahe ist, darin besteht:
- für jeden Anschluß die Werte Trep, Tmax und W in Abhängigkeit vom Typ des Dienstes zu bestimmen, der von den Endgeräten durchgeführt wird, die über die betrachtete Verbindung angeschlossen sind,
- eine Folge von Zellen, die auf jeder Verbindung ausgesendet werden, in der Weise zu verzögern, daß die Anzahl der Zellen dieser Folge auf eine Anzahl begrenzt wird, die kleiner als oder gleich W ist,
- eine Zelle und andere identische Zellen zu verlieren, die auf jeder Verbindung ausgesendet werden, indem die Dauer entsprechend einem Verlust von Zellen auf einen Wert kleiner als Tmax begrenzt wird.

2. Digitales Breitband-Fernmeldenetz mit integrierten Diensten zur Durchführung des Verfahrens gemäß Anspruch 1, das ein Vermittlungsnetz (1) mit asynchronem Zeitmultiplexbetrieb und eine Vielzahl von Endgeräten (2 bis 5) mit veränderlichen Durchsätzen aufweist,
dadurch gekennzeichnet, daß jedes Endgerät (2 bis 5) an erste Mittel (10, 11), um Daten in Form von Zellen einer festen Länge und gemäß einem an den asynchronen Zeitmultiplexbetrieb angepaßten Übertragungsprotokoll zu empfangen und auszusenden, und an zweite Mittel (6, 9) angeschlossen ist, die die ersten Mittel (10, 11) betätigen, um
- eine Empfangsbestätigung auszusenden, wenn das Endgerät eine von einem anderen Endgerät ausgesendete Datenzelle empfängt,
- mit der Aussendung von Zellen (C1, C2, C3) fortzufahren, nachdem eine erste Zelle (C0) ausgesendet wurde, und zugleich auf eine Empfangsbestätigung entsprechend der ersten Zelle (C0) zu warten und die Zahl der ausgesendeten Zellen während des Wartens auf eine vorbestimmte Anzahl W zu begrenzen, die vom Typ des durch das betrachtete Endgerät durchgeführten Dienstes abhängt,
- dann die Aussendung der Zellen während einer vorbestimmten Dauer Trep zu unterbrechen, falls die Empfangsbestätigung nicht erhalten worden ist, bevor W Zellen (C0, ... C3) fertig übertragen wurden, wobei diese vorbestimmte Dauer vom Typ des von dem betrachteten Endgerät durchgeführten Dienstes abhängt,
- dann erneut die erste Zelle (C0) zu übertragen, falls die entsprechende Empfangsbestätigung nicht während der Dauer Trep erhalten worden ist,
- dann die besetzte Verbindung durch das betrachtete Endgerät freizugeben, falls die Empfangsbestätigung nicht nach einer vorbestimmten Zeitdauer Tmax, gemessen ab Beginn der ersten Aussendung der ersten Zelle (C0) erhalten worden ist, wobei diese Zeitdauer Tmax vom Typ des durch das betrachtete Endgerät durchgeführten Dienstes abhängt,
und daß das Vermittlungsnetz (1) Verwaltungsmittel (18) aufweist, um
- für jede Verbindung die Werte Trep, Tmax und W in Abhängigkeit vom Typ des Dienstes zu bestimmen, der von den Endgeräten durchgeführt wird, die über die betrachtete Verbindung angeschlossen sind,
- eine Folge von Zellen, die über jede Verbindung ausgesendet werden, in der Weise zu verzögern, daß die Anzahl der Zellen dieser Folge auf eine Anzahl begrenzt wird, die kleiner als W oder gleich W ist, und die Zahl der Zellen dieser Folge auf den Wert W und die Verzögerung auf den Wert Tmax zu begrenzen, wenn das Netz sehr belastet ist,
- eine Zelle und andere identische Zellen zu verlieren, die infolgedessen durch das Endgerät, das die Zelle ausgesendet hat, erneut ausgesendet werden, indem die Dauer entsprechend dem Verlust von Zellen auf einen Wert kleiner als Tmax begrenzt wird, falls das Netz einer Überbelastung nahe ist.

## Claims

1. A method of managing traffic flows in a wideband integrated services digital telecommunications network comprising an asynchronous time multiplexed switching network (1) and a plurality of terminals (2 to 5) operating at various data rates and providing different types of service, said terminals transmitting and receiving data in the form of cells of fixed length and using a communications protocol adapted to asynchronous time multiplexing; the method being characterized in that it consists, in each terminal (2 to 9), in:
transmitting an acknowledgment whenever the terminal in question receives a cell;
continuing to transmit cells (C1, C2, C3) after having transmitted a first cell (C0) and while waiting to receive an acknowledgment corresponding to the first cell (C0), and limiting the number of cells transmitted while waiting to a predetermined number W;
then suspending cell transmission during a predetermined duration Trep if the acknowledgment is not received before all W cells (C0, ..., C3) have been transmitted;
then retransmitting the first cell (C0) if the corresponding acknowledgment is not received during the duration Trep;
and then releasing the connection occupied by the terminal under consideration if the acknowledgment is not received after a predetermined delay Tmax measured from the first transmission of the first cell (C0);
in that the predetermined values for W, Trep, and Tmax are functions of the type of service provided by the terminal under consideration;
and in that in the switching network (1), if close to congestion, the method consists in:
determining, for each connection, the values of the parameters W, Trep, and Tmax as a function of the type of service being provided by the terminals connected to the connection under consideration;
delaying a sequence of cells transmitted on each connection, while limiting the number of cells in said sequence to a number which is less than or equal to W; and
loosing a cell and other identical cells transmitted on each connection, while limiting the duration corresponding to cell loss to a value less than Tmax.

2. A wideband integrated services digital telecommunications network for implementing the method of claim 1, comprising an asynchronous time multiplexed switching network (1) and a plurality of terminals (2 to 5) operating at various data rates, the network being characterized in that each terminal (2 to 5) is coupled to first means (10, 11) for receiving and transmitting data in the form of cells of fixed length, and in accordance with a communications protocol adapted to asynchronous time multiplexing, and to second means (6, 9) controlling the first means (10, 11) to:
transmitting an acknowledgment whenever the terminal in question receives a cell;
continuing to transmit data cells (C1, C2, C3) after having transmitted a first cell (C0) and while waiting to receive an acknowledgment corresponding to the first cell (C0), and limiting the number of cells transmitted while waiting to a predetermined number W which is a function of the type of service provided by the terminal under consideration;
then suspending cell transmission during a predetermined duration Trep if the acknowledgment is not received before all W cells (C0, ..., C3) have been transmitted, said predetermined duration being a function of the type of service provided by the terminal under consideration;
then retransmitting the first cell (C0) if the corresponding acknowledgment is not received during the duration Trep;
and then releasing the connection occupied by the terminal under consideration if the acknowledgment is not received after a predetermined delay Tmax measured from the first transmission of the first cell (C0), said delay Tmax being a function of the type of service provided by the terminal under consideration;
and in that the switching network (1) includes management means (18) for:
determining the values of parameters W, Trep, and Tmax on each connection as a function of the type of service provided by the terminals interconnected by the connection;
if the network is very heavily loaded, delaying a sequence of cells transmitted over each connection while limiting the number of cells in the sequence to the value W and while limiting the delay to the value Tmax; and
if the network is close to congestion, loosing a cell and other identical cells retransmitted as a consequence by the terminal which transmitted said cell, while limiting the duration corresponding to cell loss to a value less than Tmax.
